(19) **Europäisches Patentamt / European Patent Office / Office européen des brevets**

(11) **EP 1 479 070 B1**

(12) **EUROPEAN PATENT SPECIFICATION**

(45) Date of publication and mention
of the grant of the patent:
**04.04.2007 Bulletin 2007/14**

(51) Int Cl.:
**G10L 15/26** (2006.01)

(21) Application number: **03702838.8**

(22) Date of filing: **30.01.2003**

(86) International application number:
**PCT/IB2003/000374**

(87) International publication number:
**WO 2003/067573 (14.08.2003 Gazette 2003/33)**

(54) **METHOD AND DEVICE FOR THE RAPID, PATTERN-RECOGNITION-SUPPORTED TRANSCRIPTION OF SPOKEN AND WRITTEN UTTERANCES**

METHODE UND GERÄT ZUR SCHNELLEN, DURCH MUSTERERKENNUNG GESTÜTZEN TRANSKRIPTION VON GESPROCHENEN UND GESCHRIEBENEN ÄUSSERUNGEN

PROCEDE ET APPAREIL PERMETTANT D'EFFECTUER UNE TRANSCRIPTION RAPIDE, REPOSANT SUR UNE RECONNAISSANCE DE CONFIGURATION, D'ENONCES VOCAUX ET ECRITS

(84) Designated Contracting States:
**AT BE BG CH CY CZ DE DK EE ES FI FR GB GR HU IE IT LI LU MC NL PT SE SI SK TR**

(30) Priority: **07.02.2002 DE 10204924**

(43) Date of publication of application:
**24.11.2004 Bulletin 2004/48**

(73) Proprietors:
• **Philips Intellectual Property & Standards GmbH**
**20099 Hamburg (DE)**
Designated Contracting States:
**DE**
• **Koninklijke Philips Electronics N.V.**
**5621 BA Eindhoven (NL)**
Designated Contracting States:
**AT BE BG CH CY CZ DK EE ES FI FR GB GR HU IE IT LI**

(72) Inventors:
• **THELEN, Eric**
**Philips Intellectual Property &**
**52066 Aachen (DE)**

• **KLAKOW, Dietrich**
**Philips Intellectual Property &**
**52066 Aachen (DE)**
• **SCHOLL, Holger**
**Philips Intellectual Property &**
**52066 Aachen (DE)**
• **WAIBEL, Ulrich**
**Philips Intellectual Property &**
**52066 Aachen (DE)**
• **REISINGER, Josef**
**Philips Intellectual Property &**
**52066 Aachen (DE)**

(74) Representative: **Volmer, Georg**
**Philips Intellectual Property & Standards GmbH,**
**Postfach 50 04 42**
**52088 Aachen (DE)**

(56) References cited:
**EP-A- 0 122 880          EP-A- 0 376 501**
**US-A- 5 649 060          US-A- 5 855 000**
**US-A- 5 937 380**

**Description**

The invention relates to a method and a device for the transcription of spoken and written utterances. The necessity for transcriptions of this kind arises in many areas of business and private life. For example, radiologists dictate their findings and lawyers dictate their statements, students often handwrite their essays or dissertations in the first instance, and minutes of meetings are often only taken down initially with the aid of a form of shorthand.

In order to be further processed, these spoken and written utterances have to be transcribed, i.e. a fair copy must be produced from them. So, for example, the employees of a typing pool manually enter into a text processing system the findings of a radiology department which have been recorded on audio tape or in computer files, or a secretary types up on a typewriter the letter dictated by her boss, which she has initially taken down in shorthand. However, thanks to modem technology, it is no longer essential today to enter the text directly into a computer in order to obtain a machine-processable transcription. Alternatively, the text can be handwritten cleanly, e.g. in block letters, or dictated clearly, e.g. with small pauses between the individual words. A downstream text or speech recognition system can then process the cleanly produced draft with the exception of a few errors which may need to be corrected manually.

The option also exists of feeding the original spoken or written utterance directly to a pattern-recognition system. To this end, speech and text recognition systems from various manufacturers are available on the market, e.g. the FreeSpeech program from Philips. However, these pattern-recognition systems operate optimally only if the spoken and written inputs are produced cleanly and clearly, and the pattern-recognition parameters of the systems have been trained, or at least adapted, to the authors and the nature of the utterances and the conditions of use. Since this is often not the case, and since there are still problems in the case of some authors, e.g. with unclear handwriting and/or in some situations, e.g. with a high noise level, such transcriptions produced automatically with the aid of a pattern-recognition system usually exhibit errors requiring correction.

The recognition results of systems of this kind are therefore generally corrected manually by a human transcriber. Some of the speech-recognition systems offer correction editors to support this manual correction. For example, the correction editor of FreeSpeech allows a synchronization of the audio reproduction with a text marking on the screen, i.e. when the audio signal is played back, the word recognized at this point is marked on the screen. When an error is recognized, the human transcriber then corrects it by means of a keyboard and/or mouse input.

US 5,855,000 discloses a special version of a correction editor. On locating a recognition error, the human transcriber corrects it with a secondary input signal, which is converted by the pattern-recognition system into a repair hypothesis. The repair hypothesis is then combined with the original recognition hypothesis to form a new hypothesis ("correlating at least a portion of the recognition hypothesis with said repair hypothesis to produce a new hypothesis"), which finally replaces the original recognition hypothesis ("replacing said located error with the new hypothesis").

One particular option that the transcriber of a spoken utterance can use as a secondary input signal is to (again) speak the text passage incorrectly recognized into the system microphone ("repair hypothesis from a respeaking of at least a portion of the utterance"). One embodiment of US 5,855,000 also provides for the recognition error to be located by the transcriber respeaking the appropriate passage, the recognition hypotheses of this repetition being arranged automatically in the original recognition hypothesis and offered to the transcriber for confirmation ("Each hypothesis in the secondary n-best list is evaluated to determine if it is a substring of the first hypothesis of the primary recognition ...").

Owing to the offering of a secondary input signal and the exploitation of information through combination of the repair hypothesis with the original recognition hypothesis, US 5,855,000 provides the transcriber with a further input modality, in addition to the conventional correction-input options using a keyboard and a mouse, which is intended to increase his productivity in correcting the results of a primary pattern recognition.

Despite all these and other known improvements to the correction editors and the pattern-recognition systems themselves, the problem persists even today that the process of correcting the pattern-recognition result of a spoken or written utterance can take more time and effort than the direct manual transcription of the utterance. The reasons for this lie *inter alia* both in the high degree of attentiveness necessary for the correction process: there are words like e.g. in the German language *"ein"* and *"kein"* (meaning "a / one" and "no none" in English), which are very similar as far as a speech recognition system is concerned and even for the transcriber the differences in appearance are easy to overlook, and in the discontinuous structure of the correction process: correct passages need only be followed, but when an incorrect passage is found, it must be marked or the cursor positioned, characters deleted and/or newly input. This leads to the situation where, after a certain error rate in the pattern-recognition result has been exceeded, it basically does not just become worthless, but actually brings about an inefficient working method for the transcriber, who would be better off undertaking a direct manual transcription of the utterance.

It is, therefore, an object of the invention to provide a method and a device to make the pattern recognition of a spoken or written utterance usable for the transcription of the utterance to the effect that a human transcriber can work at least as efficiently as in the case of a direct manual transcription.

This object is achieved by the methods and devices as claimed in claims 1, 2, 8 and 9, respectively. All these methods and devices are based on the fundamental idea, in contrast with the prior art, of not having a pattern-recognition result corrected manually, but of retaining the process of the manual transcription of a spoken or written utterance as such, but then supporting it with pattern recognition.

This can take place, for example, through a combination of the manual transcription and the pattern-recognition result as claimed in the claims 1 and 8. An utterance is manually transcribed in order to be subsequently combined with the pattern-recognition result of the utterance. Since the pattern-recognition result adds additional information to the manual transcription, the human transcriber can take this into account in his working method in order to make the manual transcription e.g. faster or more convenient for him to produce.

He can, for example, as claimed in claim 6, produce the manually transcribed text in handwritten form and/or use a form of shorthand. Spelling mistakes can be left uncorrected. As claimed in claim 7, where a keyboard is used, some keystrokes can be omitted or keys that are quicker to access can be hit in order to increase the typing speed. Of particular interest here is, for example, the restriction to hitting the keys of a single row of keys. On a German keyboard, for example, for each of the characters "4", "e", "d" and "c", only a "d" need be hit (with the middle finger of the left hand). If the use of the shift key is also omitted, hand movements are completely avoided during typing and typing speed increases considerably.

Working methods of this kind can be further supported by specially designed keyboards. For the typing style and the keyboard design the fact can be taken into account that the manual transcription and the pattern-recognition result should be as complementary to one another as possible. For example, a manual transcription can supplement a speech-recognition result in that it represents similar and therefore easily confused sounds such as "m" and "n" or "b" and "p" by different characters. In the above-mentioned example of a row of keys on a German keyboard, "m" and "n", for example, are represented by the keys "j" and "h", so they differ. Conversely, if restricted to the 10 0 keys of the resting position of the hands ("a", "s", "d", "f", "space bar" for the left hand and "space bar", "j", "k", "1", "ö" for the right hand), "m" and "n" would both be represented by "j", so would not differ, as a result of which a typing style of this kind and a keyboard supporting it would not be so suitable for the manual transcription.

The pattern recognition of the spoken or written utterance can be undertaken independently of the manual transcription. In this case, pattern recognition and manual transcription are independent of one another, and their results are combined only subsequently. It is, however, also possible for one process to support the other directly during operation.

For example, claim 2 claims an embodiment in which the pattern recognition is supported by the manually transcribed text. Dependent claim 5 cites, as examples of support of this kind, the selection of a recognition vocabulary and recognition speech model. If, for example, the word *"wrd"*, which is a shortened form as a result of omission of the vowels, emerges in the manual transcription, the German words *"ward"*, *"werd"*, *"werde"*, *"wird"*, *"wurde"*, *"würde"* and *"Würde"* are activated in the vocabulary for the pattern recognition. Accordingly, the speech model can be restricted to, for example, the sequence of the word alternatives appearing in the manual transcription.

If additional support through manual transcription in a particular manner is desired for pattern recognition, the transcriber can also insert special control instructions for the subsequent pattern recognition into the manually transcribed text. For example, he could, where appropriate, mark a change of speaker with information on the speaker's identity. In exactly the same way, information on the semantic and/or formal structure of the text passages could be given, e.g. topic information or section information such as letterhead, title or greeting formula. The pattern recognition could exploit such meta information by using suitable pattern-recognition models for different speakers, language structures and the like to increase recognition quality. It must be ensured hereby that this additional information is used sparingly so that the transcriber's additional input is justified by the improved pattern-recognition quality.

Since, in such cases, the information contained in the manually transcribed text can largely be taken into account already in an appropriate configuration of the pattern recognition, an embodiment of the invention provides that the pattern-recognition result is adopted directly as a transcription of the utterance. This saves the effort of a further combination with the manually transcribed text.

In the simplest case, the combination of a manually transcribed text and a pattern-recognition result can be undertaken by adoption of one of the two options for the transcription. Adoption of the pattern-recognition result is logical, for example, if the pattern-recognition result exhibits a very high degree of reliability. The manually transcribed text can be adopted if it evidently exhibits no errors, i.e. if, for example, all its words can be found in a dictionary and no grammatical rules have been infringed.

Conversely, the dependent claim 3 claims a stochastic combination of the two options. Let us call *O* the input signal for the pattern-recognition, *T* the possible transcriptions, *MT* the manually transcribed text, *ME* the pattern-recognition result, *P*(...) the various probability models and *P*(...|...) the conditional probabilities. The most probable transcription is then derived according to the Bayes rule as:

$$T_{opt} = \arg\max_T P(T \mid MT, ME, O) = \arg\max_T P(MT, ME, O \mid T) P(T).$$

If the manual transcription and pattern recognition are undertaken separately from one another (and if the manual transcription depends on the input signal $O$ only via the actual transcription, i.e. if $P(MT|T, O) = P(MT|T)$, which is also assumed for the following paragraphs, we also obtain:

$$T_{opt} = \arg\max_T P(MT \mid T)P(ME,O \mid T)P(T),$$

whereas if, on the other hand, pattern recognition is undertaken taking account of the manually transcribed text (claim 2):

$$T_{opt} = \arg\max_T P(MT \mid T)P(ME,O \mid T,MT)P(T),$$

or, if the manual transcription is supported by pattern recognition (claim 9):

$$T_{opt} = \arg\max_T P(MT \mid T,ME)P(ME,O \mid T)P(T).$$

For the stochastic modeling of the pattern recognition $P(ME, O|T)$ or $P(ME,O|T,MT)$, the known Hidden Markov models, for example, may be used. The following applies, for example, to $P(ME,O|T)$:

$$P(ME,O \mid T) = P(O \mid T),$$

since the pattern-recognition result $ME$ derives in an unambiguous manner from the input signal $O$: $ME = ME(O)$ and, therefore, does not contribute to the probability. The latter probability is, however, nothing other than the known production model $P(O|T)$, which is usually trained using a training corpus.

For the stochastic modeling of the manual transcription $P(MT|T)$ or $P(MT|T,ME)$, a uniform distribution of the manual transcriptions $MT$ relating to a transcription $T$ can be assumed in the simplest case. Here, $MT$ "matches" with $T$ if $MT$ can be obtained from $T$ by means of spelling errors, of the above-described omission or substitution of keystrokes or similar operations. Instead of a uniform distribution, however, statistics may also be produced for these individual processes during transcribing, these being separate for each transcriber if so desired, in order to obtain a more precise stochastic modeling. Finally, for example, the speech modeling techniques known from pattern recognition can be used for the modeling of $P(T)$.

The dependent claim 4 claims the calculation of the pattern-recognition result in the form of a scored n-best list or in the form of a word graph and, for the combination with the manually transcribed text, the undertaking of a re-scoring of the n-best list or the word graph using the manually transcribed text. To this end, an evaluation can be undertaken e.g. for each alternative of the n-best list, as to how great a distance there is between it and the manually transcribed text, in that, for example, a count is made of the number of keystrokes that would have to be omitted, supplemented or substituted in order to bring the alternative into agreement with the manual transcription. Further, these processes of omission, supplementation or substitution can also be scored differently. The sum of these scores is summarized, together with the pattern-recognition score of the alternative, to create a re-scoring. If the stochastic models are available as logarithms of probabilities, the sum of the scores can be used for the summarizing. Other options are, however, also conceivable.

Further options are available to the expert for the design of the combination of manually transcribed text and pattern-recognition result. In particular, reference is made here to the already-mentioned US 5,855,000.

Manual transcription, pattern recognition and combination of the manually transcribed text with the pattern-recognition result constitute components of an overall system for the transcription of spoken and/or written utterances. Depending on the system design, these components may be accommodated in a joint device or else separately from one another. For example, the pattern recognition can be undertaken on a dedicated server, and the combination can again run on a dedicated server. The pattern recognition can, however, also take account of the manually transcribed text as claimed in claim 2. The manual transcription, pattern recognition and combination could also be undertaken at a single station.

A configuration in which the manual transcription is undertaken after the pattern recognition can provide for an option of indicating to the human transcriber a measure of the quality of the pattern recognition undertaken, e.g. a reliability gauge of recognition quality. The transcriber can then adapt his transcription style to this gauge. In the case of an unreliable pattern-recognition result, he can transcribe more carefully, whereas, in the case of a high pattern-recognition quality, he can allow himself several errors or omitted or substituted keystrokes. In a configuration in which the pattern-recognition result is not yet available for the manual transcription, this quality gauge can be replaced by a different variable which has similar informative capacity, e.g. by a signal-to-noise ratio of the utterance.

The transcription methods according to the invention can also be combined with conventional methods. It is conceivable, for example, if a pattern-recognition result is available, for high-quality passages to be transcribed according to a conventional method, i.e. to specify the pattern-recognition result to the transcriber and have it corrected by him. In a representation of this kind, low-quality passages could then appear as white areas in which the transcriber transcribes freely, i.e. without specification, and the manual text is then combined with the pattern-recognition result by the method according to the invention.

In addition to the above-mentioned application options for the transcription of spoken utterances, such as the radiologist's findings, further applications are also conceivable. In claim 9, the creation of SMS communications (Short Message Service, e.g. in GSM mobile telephony) and of video subtitles are mentioned in particular.

An SMS can be created, for example, by speaking the text and inputting it via the keypad on the mobile telephone. It would be pointless here to input the letters in an unambiguous manner on the phone's keypad, which is reduced in size by comparison with a typewriter keyboard. So, on a standard mobile phone keypad, it would suffice, for example, to input for the German word *"dein "*(in English: "your") the numerical sequence "3, 3, 4, 6" and to leave the precise selection of the word *"dein "* from the possible letter sequences "[d, e, f] [d, e, f] [g, h, i] [m, n, o]" to the combination with the speech recognition result. If one has a mobile phone with a touchscreen and text entry, one can of course also write on the touchscreen rather than use the keypad.

The methods according to the invention can also be used for the subtitling of video films; here again, all that is involved is the transcription of spoken utterances. Likewise, television or radio broadcasts can be converted to text form, and these texts can be stored e.g. for search purposes in text databases. To deal with background noise or background music, or with purely non-speech passages such as music or film noise, appropriate speech recognition techniques known to the expert, such as non-linear spectral subtraction or segmentation techniques, can be used where necessary.

The invention will be described in detail with reference to the embodiments shown in the drawings, to which, however, the invention is not restricted.

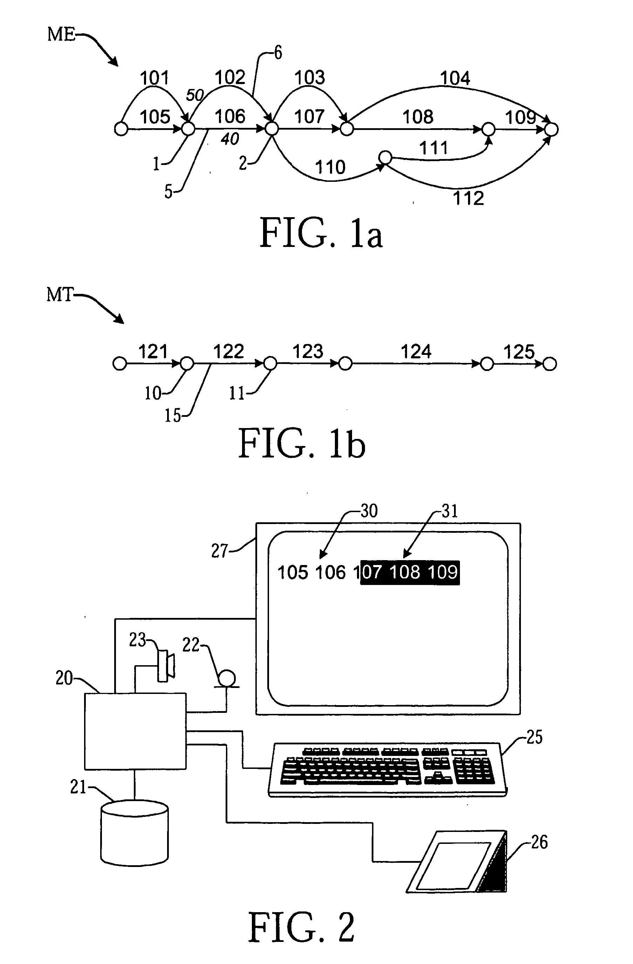

Fig. 1a and Fig. 1b show the speech recognition result and the manually produced text for a spoken utterance, and Fig. 2 shows a device according to the invention for the speech-recognition-supported manual transcription of spoken utterances

Fig. 1a shows schematically, in the form of a word graph, the result ME of the speech recognition of the German spoken utterance *"Es liegt kein Gehirntumor vor"* (in English: "There is no brain tumor present"). In this figure, the time progresses to the right, and the nodes of the word graph ME mark instants in the speech signal. The arrows between the nodes indicate recognition alternatives of the signal sections located between the instants of the nodes. For reasons of clarity, only the nodes 1 and 2 and the arrows 5 and 6 located between them are provided with reference numerals in Fig. 1a. The arrows are furthermore designated with a symbol each, i.e. with a number greater than 100, denoting in a language independent manner the word recognized in each case. The following table gives the connection of these numbers with the recognized German words and the English translation of the German words.

| Symbol | German word | English translation |
|---|---|---|
| 101 | des | of the |
| 102 | lügt | lies (in the sense of: a liar lies) |
| 103 | ein | a / one |
| 104 | Gehirntumoren | brain tumors |
| 105 | es | "es liegt kein Gehirntumor vor" means in English "there is no brain tumor present" |
| 106 | liegt | |
| 107 | kein | |
| 108 | Gehirntumor | |
| 109 | vor | |
| 110 | enge | narrow |

(continued)

| Symbol | German word | English translation |
|--------|-------------|---------------------|
| 111 | Himtumor | brain tumor |
| 112 | Hirntumoren | brain tumors |

Thus, e.g. the arrow 5 carries the symbol 106 denoting the recognized German word *"liegt"* (in English here: is) and the arrow 6 carries the symbol 102 denoting the German word *"lügt"* (in English: lies (in the sense of: a liar lies)).

If this is a scored word graph ME, then, in addition to the symbol denoting the recognized word, the arrows carry a score, which has been selected here, in line with normal practice, such that lower scores indicate preferred recognition alternatives. In Fig. 1a, this score is again input only for the arrows 5 and 6, with the score "40" for the arrow 5 and "50" for the arrow 6. Here, the scores in Fig. la relate only to the acoustic similarity of the word recognized in each case with the associated instant of the spoken utterance, i.e. they correspond in the above-mentioned formulae to the acoustic scores $P(O|T)$.

The recognition alternatives are derived from a word graph ME of this kind in that all possible paths through the word graph ME are determined, i.e. starting from the lefthand side of the graph ME, all possible arrows are followed to their right-hand end. In addition to the actually spoken German sentence *"Es liegt kein Gehirntumor vor"* (in English: There is no brain tumor present), the graph ME e.g. also codes the alternative *"Es lügt enge Hirntumoren"* ("There lies narrow brain tumors"). The best recognition alternative is the one with the lowest score. This score derives from the sum of the scores of the acoustic similarity and the scores with the aid of further information sources, e.g. with the aid of a speech model corresponding to the variable $P(T)$ in the above-mentioned formulae.

Whereas this latter recognition alternative *"Es lügt enge Hirntumoren"* is clearly nonsensical and would therefore be given only a poor score by a speech model, it would certainly be selected as the best recognition alternative only in the rare cases of severely distorted acoustic scores, e.g. in the case of high background noise levels during the spoken utterance. However, the alternative also contained in the graph ME *"Es liegt ein Gehirntumor vor"* (in English: There is a brain tumor present), i.e. *"ein"* (in English: a / one) rather than *"kein"* (in English: no / none), cannot be clearly differentiated, either acoustically or by a speech model, from the word sequence actually spoken. On the other hand, the difference between *"ein"* and *"kein"*, i.e. between the presence or absence of a brain tumor, naturally represents the crucial information in this sentence.

Fig. 1b shows a possible manual transcription MT of the same spoken utterance. Here again, the form of representation selected in order to make the connection with the speech-recognition result clear is a word graph, which is of course linear, i.e. only contains one path. For the sake of clarity, again only the nodes 10 and 11 and the arrow 15 have been provided with reference numerals in Fig. 1b. The symbols carried by the arrows of the word graph again represent in a language independent manner the German words of the transcription. The following table gives the connection between these symbols and the German words and gives remarks on how these words have been typed.

| Symbol | German word | Remark |
|--------|-------------|--------|
| 121 | es | "es ligt" results by omitting the "e" of "liegt" in the German phrase "es liegt" (in English: there is) |
| 122 | ligt | |
| 123 | keim | "keim" results by replacing the "n" by "m" in the German word "kein" (in English: no); by chance, "Keim" is a German word, too, meaning in English: germ |
| 124 | gdhkfhgjjlf | "gdhkfhgjjlf "results from the German word "Gehirntumor" (in English: brain tumor) by using only the keys in the row belonging to the resting position of the hands |
| 125 | vor | "vor" results from the full typing of the German word "vor", meaning in English here: present |

By way of example, some consequences that could arise from an accelerated working method for this manual transcription are shown in this manual transcription MT. In two of the German words, "typing errors" have occurred: in *"ligt"*, i.e. the manual transcription for the German *"liegt"* (in English: is), the keystroke for the letter "e" has been omitted, and in *"keim"*, the manual transcription for the German "*kein*" (in English: no), a typing error has been made (and not manually corrected), with an "m" instead of an "n". In the word *"gdhkfhgjjif"* (instead of the German *"Gehirntumor"* [in English: brain tumor]), the instruction to use only the keys in the row belonging to the resting position of the hands has been strictly followed (whereby, as a result, no upper case letters were used either). So the letter "G" becomes "g", "e" becomes "d", "i" becomes "k", "r" becomes "f", "n" becomes "h", "t" becomes "g", "u" and "m" become "j", and "o" becomes "l".

This manual transcription MT can now be used in a known manner e.g. for a re-scoring of the word graph ME in Fig. 1a, although no representation of this is shown here. In a re-scoring of this kind, account can be taken of facts such as that the addition of a letter when typing is less probable than the hitting of an incorrect key that is directly adjacent on the keyboard. Therefore, *"keim "* matches better with *"kein "* (in English: no) than with *"ein "* (in English: a). Similarly, the omission of a keystroke is more probable than the substitution of "ü" with "i", i.e. of keys that are hit with different fingers, as a result of which *"ligt"* matches better with *"liegt"* (in English here: is) than with *"lügt"* (in English: lies). The combination of the manual transcription MT with the pattern-recognition result ME in this example thus achieves the difficult object of distinguishing *"kein "* (in English: no) from *"ein "* (in English: a), and of generating the correct transcription of the German phrase *"Es liegt kein Gehirntumor vor"* (in English: There is no brain tumor present).

Fig. 2 shows a device according to the invention for the speech-recognition-supported, manual transcription of spoken utterances. Connected to a processing unit 20 are a data store 21, a microphone 22, a loudspeaker 23, a keyboard 25, a footswitch 26 and a screen 27. Via the microphone 22, the spoken utterance can be directly recorded and stored as an audio file in the data store 21. The spoken utterance can, however, as an alternative to this, also be transferred to the processing unit 20 via a data carrier not shown in Fig. 2 or via a network such as a telephone network or the Internet. The loudspeaker 23 serves for reproducing the spoken utterance for the manual transcription. A headset, for example, may also be used, however, as an alternative to the microphone 22 and/or to the loudspeaker 23.

The processing unit 20 can then itself undertake speech recognition of the spoken utterance, and store the recognition result in the data store 21. It can, however, also receive this recognition result via a network, for example. The keyboard 25 serves, together with the footswitch 26 for inputting the manual transcription and the screen 27 serves for visual display. The invention can also be combined with the suggestion of text continuations as known from the prior art of correction editors. In this case, the screen 27 serves for representation of the manually input text and the words and word completions suggested by virtue of the combination of the manual input with the speech-recognition result.

The screen 27 shows a situation where, for the spoken German utterance "*Es liegt kein Gehirntumor vor*" (in English: There is no brain tumor present) the text 30 with the contents *"Es liegt k"* was manually input beforehand. Owing to the combination with the speech-recognition result, which could be present in the data store 21 in the form of the word graph ME shown in Fig. 1a, for example, the processing unit 20 then suggests the text continuation 31 with the contents *"ein Gehirntumor vor ",* which is now clear in this word graph ME, so that the German text *"Es liegt kein Gehirntumor vor"* is now visible on the screen. To distinguish the continuation suggestion 31 from the manually input text 30, this is shown in a different way, here for example in inverse video, i.e. in white lettering on a black background. By operating the footswitch 26, the human transcriber can now accept this text continuation 31. If, however, he does not agree with it, he simply continues typing on the keyboard 25.

Again, to provide a language independent representation in Fig. 2 the symbols already employed in Fig. la are re-used, i.e. text 30 is shown as the symbol sequence "105 106 1" and text 31 as "07 108 109" utilizing the correspondence introduced above and whose relevant part is repeated here:

| Symbol | German word | English translation |
|--------|-------------|---------------------|
| 105 | es | "es liegt kein Gehirntumor vor" means in English "there is no brain tumor present" |
| 106 | liegt | |
| 107 | kein | |
| 108 | Gehirntumor | |
| 109 | vor | |

As already said, in Fig. 2, the situation is assumed that the "*k*" of *"kein"* (in English: no) is just input as the last part of the typed text 30 and the *"ein"* of *"kein"* is proposed as the first part of the proposed continuation 31 of the typing. This is represented in Fig. 2 by showing the "1 " of symbol 107 as the last part of text 30 and the "07" of symbol 107 as the first part of text 31.

In the event the human transcriber rejects the text continuation 31, e.g. by continuing typing, it may happen that the speech-recognition result contains no more paths compatible with the input manual transcription. Let us take as the basis for the speech-recognition result the word graph ME of Fig. 1a, but let us assume that the spoken utterance is the German sentence *"Es liegt keine Hirnblutung vor"* (in English: There is no cerebral hemorrhage present). The processing unit 20 then recognizes that the previous manual transcription can no longer be combined with the speech-recognition result ME, and can initiate an appropriate correction procedure. For example, it can use the previous manual input by taking it into account to start a new speech recognition of the spoken utterance in order to use this for a further combination with the previous and the subsequent manual inputs.

**Claims**

1. A method of transcribing a spoken or written utterance with the following steps :

   - manual transcription of the utterance,
   - pattern recognition of the utterance, wherein the manual transcription and the pattern recognition may be performed in any order, and
   - combination of the manual transcription (MT) and the pattern-recognition result (ME) for correcting and/or completing the manual transcription (MT).

2. A method of transcribing a spoken or written utterance with the following steps:

   - manual transcription of the utterance,
   - pattern recognition of the utterance, taking account of the manually transcribed text (MT), and
   - creation of the transcription of the utterance through combination of the manual transcription (MT) and the pattern-recognition result (ME) for correcting and/or completing the manual transcription (MT).

3. A method as claimed in claim 1 or 2, **characterized in that** the combination of the manually transcribed text (MT) and the pattern-recognition result (ME) consists in determining the transcription for the utterance that is most probable according to stochastic models for the processes of manual transcription and pattern recognition.

4. A method as claimed in claim 1 or 2, **characterized in that**:

   - the pattern-recognition result (ME) is a scored N-best list or a scored word graph (ME), and
   - the combination of the manually transcribed text (MT) and the pattern-recognition result (ME) consists in a re-scoring of the N-best list or the word graph (ME) taking account of the manually transcribed text (MT).

5. A method as claimed in claim 2, **characterized in that** the taking into account of the manually transcribed text (MT) in the pattern recognition of the utterance consists in the selection of the pattern-recognition vocabulary and/or the pattern-recognition language model.

6. A method as claimed in claim 1 or 2, **characterized in that** the utterance is a spoken utterance, the pattern recognition is speech recognition, and the manual transcription involves handwriting and/or a form of shorthand.

7. A method as claimed in claim 1 or 2, **characterized in that** the manual transcription is performed by keyboard input in a manner in which the time required for typing has been shortened by the omission of keystrokes and/or by hitting different keys in order to reduce the extent of the finger and/or hand movements as compared with the creation of a generally applicable manual transcription.

8. A device for the transcription of a spoken or written utterance with the following components :

   - means for inputting the manual transcription of the utterance,
   - means for the pattern recognition of the utterance,
   - means for the combination of the manual transcription (MT) and the pattern-recognition result (ME) for correcting and/or completing the manual transcription (MT).

9. The use of a method as claimed in one of claims 1 to 7 for creating an SMS communication or a video subtitle.

**Patentansprüche**

1. Verfahren zur Transkription einer gesprochenen oder schriftlichen Äußerung mit den folgenden Schritten:

   - manuelle Transkription der Äußerung,
   - Mustererkennung der Äußerung, wobei die manuelle Transkription und die Mustererkennung in beliebiger Reihenfolge ausgeführt werden können, und
- Kombination der manuellen Transkription (MT) und des Mustererkennungsergebnisses (ME) zum Korrigieren und/oder Vervollständigen der manuellen Transkription (MT).

**2.** Verfahren zur Transkription einer gesprochenen oder schriftlichen Äußerung mit den folgenden Schritten:

- manuelle Transkription der Äußerung,
- Mustererkennung der Äußerung unter Berücksichtigung des manuell transkribierten Textes (MT) und
- Erstellung der Transkription der Äußerung durch Kombination der manuellen Transkription (MT) und des Mustererkennungsergebnisses (ME) zum Korrigieren und/oder Vervollständigen der manuellen Transkription (MT).

**3.** Verfahren nach Anspruch 1 oder 2, **dadurch gekennzeichnet, dass** die Kombination des manuell transkribierten Textes (MT) und des Mustererkennungsergebnisses (ME) darin besteht, die nach stochastischen Modellen für die Prozesse der manuellen Transkription und der Mustererkennung wahrscheinlichste Transkription für die Äußerung zu bestimmen.

**4.** Verfahren nach Anspruch 1 oder 2, **dadurch gekennzeichnet, dass**:

- das Mustererkennungsergebnis (ME) eine bewertete N-Besten-Liste oder ein bewerteter Wortgraph (ME) ist und
- die Kombination des manuell transkribierten Textes (MT) und des Mustererkennungsergebnisses (ME) in einer Wiederbewertung der N-Besten-Liste oder des Wortgraphen (ME) unter Berücksichtigung des manuell transkribierten Textes (MT) besteht.

**5.** Verfahren nach Anspruch 2, **dadurch gekennzeichnet, dass** die Berücksichtigung des manuell transkribierten Textes (MT) bei der Mustererkennung der Äußerung in der Auswahl des Mustererkennungsvokabulars und/oder des Mustererkennungssprachmodells besteht.

**6.** Verfahren nach Anspruch 1 oder 2, **dadurch gekennzeichnet, dass** die Äußerung eine gesprochenen Äußerung ist, die Mustererkennung Spracherkennung ist und die manuelle Transkription Handgeschriebenes und/oder eine Form einer Kurzschrift beinhaltet.

**7.** Verfahren nach Anspruch 1 oder 2, **dadurch gekennzeichnet, dass** die manuelle Transkription durch Tastatureingabe auf eine Weise ausgeführt wird, bei der die zum Tippen benötigte Zeit durch Weglassen von Tastenanschlägen und/oder durch Anschlagen anderer Tasten zur Verringerung der Größe der Finger- und/oder Handbewegungen im Vergleich zu der Erstellung einer allgemein verwendbaren manuellen Transkription verkürzt wird.

**8.** Vorrichtung zur Transkription einer gesprochenen oder schriftlichen Äußerung mit den folgenden Komponenten:

- Mitteln zur Eingabe der manuellen Transkription der Äußerung,
- Mitteln zur Mustererkennung der Äußerung,
- Mitteln zur Kombination der manuellen Transkription (MT) und des Mustererkennungsergebnisses (ME) zum Korrigieren und/oder Vervollständigen der manuellen Transkription (MT).

**9.** Verwendung eines Verfahrens nach einem der Ansprüche 1 bis 7 zur Erstellung einer SMS-Nachricht oder eines Videountertitels.

**Revendications**

**1.** Procédé de transcription d'un énoncé oral ou écrit, comprenant les étapes suivantes :

- la transcription manuelle de l'énoncé;
- la reconnaissance de formes de l'énoncé, la transcription manuelle et la reconnaissance de formes étant réalisée dans un ordre quelconque, et
- la combinaison de la transcription manuelle (MT) et du résultat de la reconnaissance de formes (ME) pour corriger et/ou compléter la transcription manuelle (MT).

**2.** Procédé de transcription d'un énoncé oral ou écrit, comprenant les étapes suivantes :

- la transcription manuelle de l'énoncé;
- la reconnaissance de formes de l'énoncé, en prenant en compte le texte transcrit manuellement (MT), et
- la création de la transcription de l'énoncé oral par la combinaison de la transcription manuelle (MT) et du résultat de la reconnaissance de formes (ME) pour corriger et/ou compléter la transcription manuelle (MT).

**3.** Procédé suivant la revendication 1 ou 2, **caractérisé en ce que** la combinaison du texte transcrit manuellement (MT) et du résultat de la reconnaissance de formes (ME) comprend la détermination de la transcription pour l'énoncé oral qui est la plus probable suivant des modèles stochastiques pour les processus de transcription manuelle et de reconnaissance de formes.

**4.** Procédé suivant la revendication 1 ou 2, **caractérisé en ce que**

- le résultat de la reconnaissance de formes (ME) est une liste des N meilleurs éléments avec notation ou un graphe de mots avec notation (ME), et
- la combinaison du texte transcrit manuellement (MT) et du résultat de la reconnaissance de formes (ME) consiste en une nouvelle notation de la liste des N meilleurs éléments ou du graphe de mots (ME) en prenant en compte le texte transcrit manuellement (MT).

**5.** Procédé suivant la revendication 2, **caractérisé en ce que** la prise en compte du texte transcrit manuellement (MT) dans la reconnaissance de formes de l'énoncé consiste en la sélection du vocabulaire de reconnaissance de formes et/ou du modèle de langue de reconnaissance de formes.

**6.** Procédé suivant la revendication 1 ou 2, **caractérisé en ce que** l'énoncé est un énoncé oral, la reconnaissance de formes est une reconnaissance vocale, et la transcription manuelle implique l'écriture à la main et/ou une forme de prise de notes sténographique.

**7.** Procédé suivant la revendication 1 ou 2, **caractérisé en ce que** la transcription manuelle est réalisée par une saisie sur clavier d'une manière suivant laquelle le temps requis pour la saisie manuelle a été raccourci par l'omission de frappes de touches et/ou par l'enfoncement de différentes touches, afin de réduire la portée du doigt et/ou les mouvements de la main, par comparaison avec la création d'une transcription manuelle généralement applicable.

**8.** Dispositif pour la transcription d'un énoncé oral ou écrit, comprenant les composants suivants:

- des moyens pour saisir la transcription manuelle de l'énoncé;
- des moyens pour la reconnaissance de formes de l'énoncé, et
- des moyens pour la combinaison de la transcription manuelle (MT) et du résultat de la reconnaissance de formes (ME) pour corriger et/ou compléter la transcription manuelle (MT).

**9.** Utilisation d'un procédé suivant l'une quelconque des revendications 1 à 7 pour créer une communication SMS ou un sous-titre vidéo.

FIG. 1a

FIG. 1b

FIG. 2